Europäisches Patentamt

European Patent Office

Office européen des brevets

(19)

(11) Veröffentlichungsnummer : **0 070 362
B1**

# EUROPÄISCHE PATENTSCHRIFT

(12)

(45) Veröffentlichungstag der Patentschrift :
**12.02.86**

(51) Int. Cl.⁴ : **F 16 B   7/04**

(21) Anmeldenummer : **82104096.1**

(22) Anmeldetag : **12.05.82**

(54) Gestell aus lösbar verbindbaren Profilstangen.

(30) Priorität : **20.07.81 DE 3128595**

(43) Veröffentlichungstag der Anmeldung :
**26.01.83 Patentblatt 83/04**

(45) Bekanntmachung des Hinweises auf die Patenterteilung : **12.02.86 Patentblatt 86/07**

(84) Benannte Vertragsstaaten :
**AT BE CH FR IT LI NL SE**

(56) Entgegenhaltungen :
**EP-A- 0 000 525
FR-A- 2 152 941**

(73) Patentinhaber : **Gebrüder Vieler GmbH
Gennaer Strasse 66
D-5860 Iserlohn-Letmathe (DE)**

(72) Erfinder : **Hackenberg, Dieter
Kohlensiepen 130d
D-5810 Witten 6 (DE)**

(74) Vertreter : **Mentzel, Norbert, Dipl.-Phys. et al
Patentanwälte Dipl.-Phys. Buse Dipl.-Phys. Mentzel
Dipl.-Ing. Ludewig Unterdörnen 114
D-5600 Wuppertal 2 (DE)**

## Beschreibung

Die Erfindung richtet sich auf ein Gestell der im Oberbegriff des Anspruches 1 genannten Art, wo Profilstangen lösbar miteinander gekuppelt werden. Dies geschieht durch einen Verbinder, der aus einem Lagergehäuse und aus einem darin längsverschieblich aufgenommenen Halteglied besteht. Der Verbinder wird mit seinem Lagergehäuse stirnendig in das Hohlprofil einer ersten Profilstange so eingesteckt, daß an der Stirnseite des Lagergehäuses befindliche feste Kupplungsnasen herausragen. Am freien Ende des Halteglieds befindet sich ein Kupplungshaken, der ebenfalls stirnseitig aus dieser ersten Profilstange herausragt. Die Kupplungsnasen und Kupplungshaken bilden Kupplungsmittel, die in eine hinterschnittene Längsnut einer anderen Profilstange des Gestells eingeführt und dort festgeklemmt werden.

Bei einem Gestell mit solchen Kupplungsmitteln ist es bekannt (DE-U-73 41 203), das Halteglied mit einem quer zur Profilstange verlaufenden Exzenterbolzen zusammenwirken zu lassen, der aus einer Exzenterscheibe und einem als Handhabe dienenden Drehkopf besteht. Der Drehkopf steckt in einer Querbohrung der den Verbinder aufnehmenden Profilstange. Beim Drehen des Exzenterbolzens wird das Halteglied von der Exzenterscheibe zunächst in Längsrichtung der Profilstange zwischen einer Ausschublage und einer Einschublage seines Kupplungshakens bewegt. Am Lagergehäuse ist aber noch eine Keilfläche vorgesehen, gegen welche sich das Halteglied mit einer Gegenschräge abstützt. Beim Drehen des Exzenterbolzens führt deshalb der Kupplungshaken auch eine quer zur Profilstange gerichtete Bewegung aus, hintergreift dabei die Längsnut der anderen Profilstange und zieht diese an das Stirnende der den Verbinder aufnehmenden ersten Profilstange heran. Die Handhabung beim Kuppeln bzw. Entkuppeln der Profilstangen ist zwar einfach, weil dafür jeweils nur eine halbe Drehung des Exzenterbolzens ausgeführt zu werden braucht, doch ist es umständlich und zeitraubend den Verbinder aus seinen Bestandteilen im Hohlraum der Profilstange zu montieren.

Es ist grundsätzlich bekannt (DE-A-28 17 518), Verbinder außerhalb der Profilstange als Baueinheit vorzumontieren und die Montage des fertigen Verbinders in der Profilstange dadurch zu vereinfachen, daß man den Exzenterbolzen axial verschieblich im Lagergehäuse führt und einer axialen Federbelastung aussetzt. Dadurch ist der Exzenterbolzen bestrebt, mit seinem Drehkopf aus dem Lagergehäuse herausgedrückt zu werden. Zur Montage des Verbinders ist es lediglich nötig, diesen Drehkopf, nach Art eines federnden Druckknopfs, in das Lagergehäuse einzudrücken und den Verbinder in den Hohlraum der Profilstange vom Stirnende aus einzuschieben. Ist der Verbinder in seine bestimmungsgemäße Position im Profilinneren gelangt, so schnappt der federbelastete Drehkopf von selbst in die Querbohrung der Profilstange ein. Dadurch ist die Montagelage des Verbinders festgelegt. Bei diesem bekannten Verbinder führt der Kupplungshaken beim Drehen des Exzenters nur eine quergerichtete Schwenkbewegung aus.

Es ist bereits vorgeschlagen worden, die vorgenannte Druckknopfwirkung des Exzenterbolzens zur Montage und Demontage des Verbinders an einer Profilstange auch bei Verbindern der eingangs genannten Art anzuwenden, wo beim Drehen des Exzenterbolzens der Kupplungshaken außer der quergerichteten Bewegung auch noch eine Längsbewegung bezüglich der Profilstange ausführt. Bei diesem, dem Oberbegriff des Anspruches 1 entsprechenden Verbinder (EP-A-0 059 463, veröffentlicht 8.9.1982, Stand der Technik gemäß Artikel 54 Abs. 3 EPÜ), erfolgt die Axialfederung des Exzenterbolzens durch eine sich unmittelbar an der Exzenterscheibe abstützende Feder. Der Zusammenbau des Verbinders ist umständlich und zeitaufwendig, weil das Bolzenende durch ein Loch in der Bodenwand des Lagergehäuses hindurchgeführt und auf der Rückseite der Bodenwand mit einem Sprengring versehen werden muß, der die Axialbewegung des Exzenterbolzens durch seine Anlage an der Rückseite der Bodenwand begrenzt. Zum Zusammenbau des Verbinders aus seinen Bestandteilen bzw. zum Zerlegen in seine Bestandteile bei Reparaturarbeiten sind besondere Werkzeuge erforderlich.

Der Erfindung liegt die Aufgabe zugrunde, ein schnell und sicher zusammenbaubares Gestell der im Oberbegriff des Anspruches 1 genannten Art zu entwickeln, dessen Verbinder aus möglichst wenigen, bequem und schnell zusammenbaubaren Bestandteilen besteht. Dies wird erfindungsgemäß durch die im Kennzeichen des Anspruches 1 angeführten Maßnahmen erreicht, denen folgende Bedeutung zukommt.

Außerhalb des Lagergehäuses, also unter guten Sichtverhältnissen, wird der Exzenterbolzen durch das Halteglied geführt und beide gemeinsam in das Lagergehäuse vom Gehäuseende aus eingeschoben, was wegen des Wandausschnitts im Lagergehäuse bequem möglich ist. Zusätzliche Befestigungsmittel für den Exzenterbolzen sind überflüssig, weil diese Funktion zugleich vom Halteglied übernommen wird. Der am Endstück des Halteglieds befindliche Steuervorsprung, der normalerweise die Steuerbewegung für die Einschubbewegung des Halteglieds vom Exzenterbolzen empfängt, hält über den Hintergriff der Exzenterscheibe den Exzenterbolzen im Wandausschnitt fest. Die Öffnung des Wandausschnitts im Lagergehäuse wird gleichsam durch den Steuervorsprung am Halteglied für den Exzenterbolzen geschlossen. Der Exzenterbolzen ist damit in Verlaufsrichtung der Profilstange festgehalten. Eine axiale Festhaltung des Exzenterbolzens ergibt sich, weil seine Exzenterscheibe vom federbelasteten Endstück des Haltegliedes gegen die Innenwand des Lagergehäuses angedrückt wird. Irgendwelche zusätzlichen Befestigungsmittel sind weder beim Exzenterbolzen noch beim Halteglied erforderlich. Die Einzelteile halten sich gegenseitig fest. Der erfindungsgemäße Verbinder besteht aus wenigen Einzelteilen, die ohne Werkzeuge manuell schnell zusammengebaut und wieder zerlegt werden können. Die Praxis zeigte, daß die zusammengebauten Einzelteile dennoch sicher aneinander gehalten werden. Ein Bauteil wird eingespart, wenn das Halteglied zugleich mit einer abgebogenen Federzunge versehen wird, die für die Federkraft seines Endstücks sorgt. Dazu erzeugt man das Halteglied aus einem Stahlblechstreifen, aus dem die Federzunge mit ausgeschnitten wird.

Um das Halteglied in seine Ausschubstellung zuverlässig zurückzuführen, empfiehlt es sich, am Endstück außer dem die Exzenterscheibe hintergreifenden Steuervorsprung auf der gleichen Flächenseite noch einen zusätzlichen Steuervorsprung vorzusehen und die Exzenterscheibe zwischen beiden Vorsprüngen anzuordnen. Zwischen den beiden Steuervorsprüngen wird dabei ein in Längsverschiebungsrichtung des Haltegliedes sich erstreckendes Langloch vorgesehen, das zum Durchstecken des Exzenterbolzens bei der bereits erwähnten Vormontage dient. Die Steuervorsprünge können aus abgewinkelten Randteilen des Stahlblechstreifens bestehen. Montageflächen im Inneren des Lagergehäuses erleichtern den Ein- und Ausbau der Bestandteile. Weitere Ausbiegungen im Längsverlauf des Haltegliedes fördern einen federnden Andruck des Kupplungshakens in Einschublage des Haltegliedes.

Für eine gute Verteilung der Federfunktion im Halteglied empfiehlt es sich, die Federzunge im Mittelstück anzuordnen, so daß die Federkraft einerseits für eine gute Anlage des mit dem Kupplungshaken ausgerüsteten Anfangsstücks an der Keilfläche des Lagergehäuses sorgt und andererseits die gewünschten Druckknopfwirkungen an seinem Endstück entfaltet.

Weitere Vorteile und Maßnahmen sind aus den Ansprüchen, den Zeichnungen und der nachfolgenden Beschreibung ersichtlich. In den Zeichnungen ist die Erfindung in einem Ausführungsbeispiel dargestellt. Es zeigen :

Figur 1 die geschnittene Seitenansicht längs der in Fig. 3 angedeuteten Schnittlinie I-I von zwei Profilstangen des erfindungsgemäßen Gestells, die zwar mit einem Verbinder versehen, aber noch nicht miteinander gekuppelt sind,

Figur 2 eine der Fig. 1 entsprechende Schnittansicht längs der Schnittlinie II-II von Fig. 4, wo der Verbinder die Kupplung der beiden Profilstangen vollzogen hat,

Figur 3 eine längsgeschnittene Draufsicht von Fig. 1 längs der dortigen Schnittlinie III-III,

Figur 4 eine der geschnittenen Draufsicht von Fig. 3 entsprechende Darstellung der gekuppelten Profilstangen längs der Schnittlinie IV-IV von Fig. 2,

Figur 5 eine der Fig. 3 entsprechende längsgeschnittene Draufsicht, wo allerdings Bauteile des Verbinders sich in einer Demontagestellung befinden, die einen Ein- und Ausbau des Verbinders gestattet,

Figuren 6 und 7 die Draufsicht und Seitenansicht eines zum Verbinder gehörenden Haltegliedes,

Figuren 8 und 9 die Seitenansicht und Draufsicht eines zum Verbinder gehörenden Lagergehäuses und

Figuren 10 und 11 die ausgebrochene Seitenansicht und Endansicht eines beim Verbinder verwendeten Exzenterbolzens.

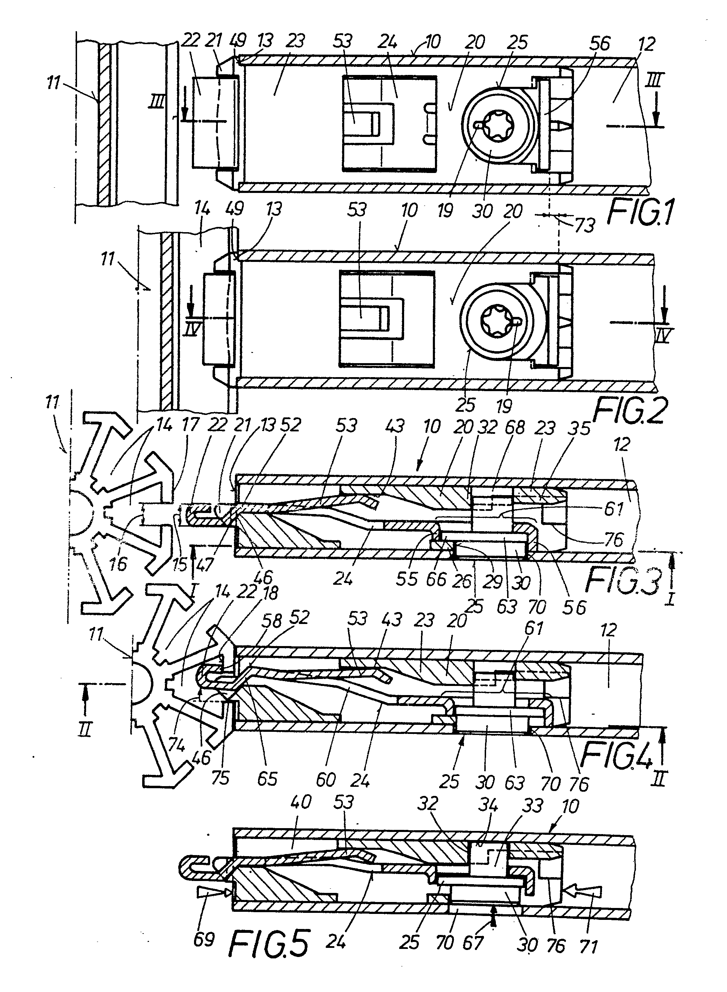

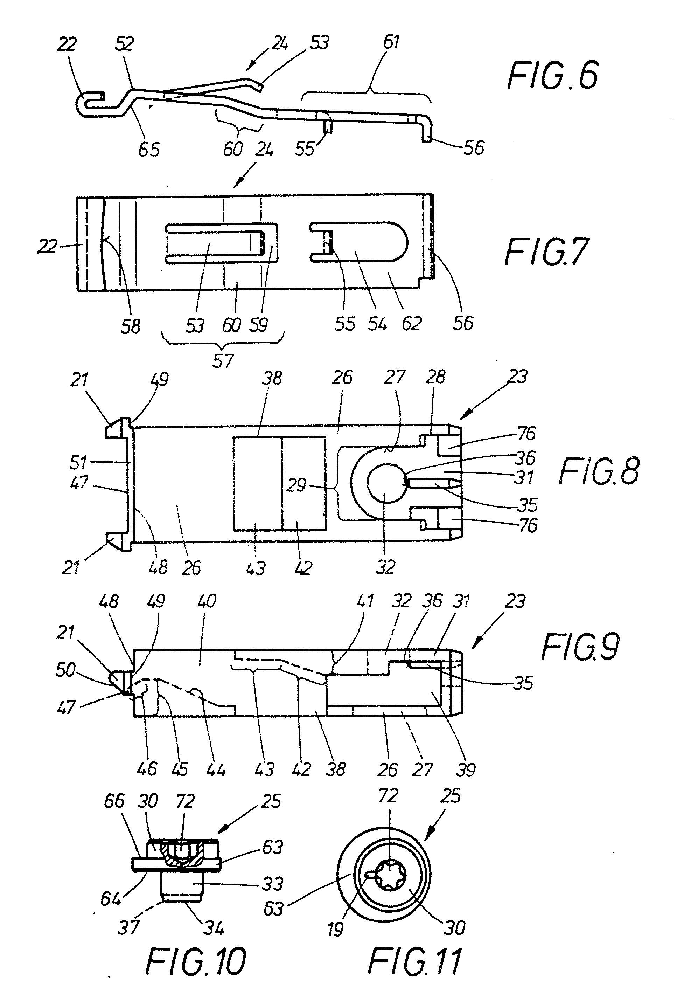

Zum Kuppeln von Profilstangen 10, 11 des erfindungsgemäßen Gestells dienen Verbinder 20, die im Hohlraum 12 der einen Profilstange 10 untergebracht sind, aus deren Stirnfläche 13 Kupplungsmittel 21, 22 herausragen. Diese kommen im Kupplungsfall, der in Fig. 2 und 4 gezeigt ist, in Eingriff mit hinterschnittenen Längsnuten 14 der anderen Profilstange 11, die hier aus einer vertikalen achteckigen Säule besteht, die längs ihrer Umfangsfläche mit acht solchen Längsnuten 14 ausgerüstet ist.

Der Verbinder 20 besteht aus einer vorgefertigten Baueinheit, die im vorliegenden Ausführungsbeispiel nur drei Bestandteile benötigt, nämlich ein Lagergehäuse 23, einen als Halteglied 24 fungierenden Blechstreifen und einen Exzenterbolzen 25. Diese Bestandteile haben folgendes Aussehen :

Das Lagergehäuse 23 hat Rechteckform mit einem dem Hohlprofil 12 der Profilstange 10 angepaßten Querschnitt. Das Lagergehäuse hat die Form eines Rechteckrohres, das, bis auf die nachfolgend genannten Einbauten, zum vorderen und hinteren Stirnende hin offen ist und damit eigentlich nur Seitenwände aufweist. Die in Fig. 8 vorn liegende Seitenwand 26 ist am inneren Ende des Lagergehäuses 23 mit einem Wandausschnitt 27 mit nach innen zu abgeschrägten Absätzen 28 versehen, die als Montageöffnung für den mit dem Exzenterbolzen 25 ausgerüsteten Blechstreifen 24 dienen. Der Wandausschnitt 27 geht in eine kreisförmige Lagerstelle 29 für einen entsprechend dimensionierten Lagerkopf 30 des Exzenterbolzens 25 über. Die im Wandausschnitt 27 von Fig. 8 sichtbare hintere Seitenwand 31 ist, koaxial zum Kreisbogen der vorderen Lagerstelle 29, mit einer Lageröffnung 32 für einen Lagerzapfen 33 am Exzenterbolzen 25 versehen, der allerdings normalerweise, wie aus Fig. 3 und 4 hervorgeht, im Montagezustand mit seinem Stirnende 34 nur halbseitig in die Lageröffnung 32 hineinragt, weil diese, ausweislich der Draufsicht auf das Lagergehäuse 23 von Fig. 9, abgesetzt ist und normalerweise nur im linken Öffnungsbereich von Fig. 9 den Lagerzapfen 33 abstützt. Auf der gegenüberliegenden Seite sitzt vor der Lageröffnung 32 eine zugeschärfte längsverlaufende Leiste 35 an der hinteren Seitenwand 31, die mit ihrem Innenende 36 am Umfang des Lagerzapfens 33 zu liegen kommt. Zu Einführzwecken des am Blechstreifen 24 eingefügten Exzenterbolzens 25 besitzt sein Lagerzapfen 33 eine am besten aus Fig. 10 ersichtliche diametrale Montagenut 37, dei beim Montagevorgang eine ausgerichtete Drehlage des Exzenterbolzens 25 festlegt, wenn dieser über die erwähnte Zuschärfung längs der Leiste 35 in dem Wandausschnitt 27 eingeführt wird.

Das Lagergehäuse 23 ist aus Zinkdruckguß hergestellt und besitzt für die Zugänglichkeit von Teilen der Gießform ein vorderes Fenster 38, gemäß Fig. 8, ein oberes Fenster 39, gemäß Fig. 9, und ein hinteres, am besten aus Fig. 5 ersichtliches Fenster 40, die in verschiedenen Längenabschnitten des Lagergehäuses 23 untergebracht sind. Diese Fenster dienen natürlich auch zur Beobachtung des Montagevorgangs und der Endlage des mit dem Exzenterbolzen 25 ausgerüsteten Blechstreifens 24. Diese Fenster ermöglichen die besondere, aus Fig. 9 gestrichelt angedeutete Profilierung der beiden Innenflächen der vorderen und hinteren Seitenwand 26, 31. Die hintere Seitenwand 31 ist schon im Bereich des erwähnten inneren Teils der Lageröffnung 32 mit einer Verdickung 41 versehen, vor welcher eine für Demontagezwecke bedeutsame Neigungsfläche 42 liegt, die schließlich in eine ebene Innenwand 43 übergeht. Jenseits des vorderen Fensters 38 besitzt die gegenüberliegende Innenfläche der vorderen Seitenwand 26, ausgehend vom Fenster 38, eine ansteigende Rampe 44, die im vorderen Bereich des Lagergehäuses eine Wandverdickung 45 erzeugt, wo die Wandstärke zunächst ein kurzes Stück gleichmäßig weiterläuft, um schließlich in einer steilen Keilfläche 46 nach vorne zu abzufallen. Die Spitze 47 der Keilfläche liegt etwas vor dem vorderen Stirnende 48 des Lagergehäuses, wie aus Fig. 9 und 8 hervorgeht. Dieses Stirnende 48 wird von einem Paar ortsfester Kupplungsnasen 21 überragt, welche einen Teil der oben erwähnten Kupplungsmittel des Verbinders 20 bilden. Die Kupplungsnasen 21 sind in Fortsetzung der oberen und unteren Seitenwand des Lagergehäuses ausgeformt, haben etwa Pfeilform und überragen die obere und untere Seitenfläche mit einem am besten aus Fig. 8 ersichtlichen Absatz 49, der sich im Montagefall, wie aus Fig. 2 hervorgeht, vor die Stirnfläche 13 im Rohrprofil der Profilstange 10 setzt. Durch diese Anschlagwirkung ist die Einstecktiefe des Verbinders 20 im Hohlraum 12 der Profilstange 10 festgelegt. In Draufsicht der Fig. 9 gesehen, besitzen die Nasen 21 eine Auflaufschräge 50, welche die Einführung der Kupplungsmittel in die Längsnut 14 der anderen Profilstange 11 erleichtern soll. Wegen der vorgezogenen Keilfläche 46 vor dem Gehäuseende 48 sind die beiden Kupplungsnasen 21 von einem durchgehenden Keilsteg 51 gemäß Fig. 8 miteinander verbunden.

Der Stahlblechstreifen 24 hat die besondere aus Fig. 6 und 7 ersichtliche Form. An seinem vorderen Ende besitzt er einen zurückgebogenen Haken 22 mit einer geschweiften Endkante 58, wodurch ein bewegliches Kupplungsmittel im Verbinder 20 erzeugt wird. Im anschließenden Mittelstück 57 des Stahlblechstreifens 24 ist durch einen U-förmigen Schnitt 59 eine Federzunge 53 ausgeschnitten und aus dem Streifen abgebogen. Im Mittelstück 57 befindet sich auch noch eine Z-artige Ausbiegung 60 im Blechstreifen 24. Der Blechstreifen 24 läuft innen in einem Steuerabschnitt 61 aus, in dem zunächst ein Langloch 54 ausgeschnitten ist, dessen der Mitte zugekehrter Rand abgekantet ist und eine vorspringende Leiste 55 auf einer Flächenseite 62 bildet. Das Ende des Blechstreifens 24 ist im gleichen Sinne abgekantet und bildet eine endseitige Leiste 56. Diese mit Leisten 55, 56 versehene Flächenseite 62 liegt der abgewinkelten Zunge 53 gegenüber.

Zur Montage wird zunächst der Exzenterbolzen 25 mit seinem Lagerzapfen 33 durch das Langloch 54 gesteckt, bis eine Exzenterscheibe 63 des Bolzens 25 mit ihrer, aus Fig. 10 ersichtlichen inneren Stirnfläche 64, anschlagartig an der vorerwähnten Flächenseite 62 des Stahlblechstreifens 24 zur Anlage kommt. Dabei kommen diametral gegenüberliegende Umfangsstellen der Exzenterscheibe 63 zwischen die beiden Leisten 55, 56 zu liegen. Der Stahlblechstreifen 24 wird mit dem darin steckenden Exzenterbolzen 25 durch den bereits erwähnten Wandausschnitt 27 des Lagergehäuses 23 eingeführt, wobei die erwähnten schräg verlaufenden Neigungsflächen 42 und Rampen 44 auf den Innenflächen der beiden Seitenwände 31, 26 den Stahlblechstreifen 24 durch das Lagergehäuse 23 hindurchleiten. Im endgültigen Montagezustand nehmen die Bauteile die aus Fig. 1 und 3 ersichtliche Lage im Verbinder 20 ein. Der Kupplungshaken 22 befindet sich dann zwischen den beiden Kupplungsnasen 21 außerhalb des Lagergehäuses 23. Die Kröpfung 52 schnappt dabei vor die Keilspitze 47, wobei sich die aus Fig. 6 ersichtliche Innenflanke 65 dieser Abkröpfung als Gegenschräge vor die Keilfläche 46 legt. Das freie Ende der Federzunge 53 stützt sich an der erwähnten Innenwand 43 des Lagergehäuses 23 ab. Die Endleiste 56 hintergreift den Exzenterbolzen 25 an seiner Exzenterscheibe 63 und hält dadurch den Exzenterbolzen 25 in den erwähnten Lagerstellen 29 und Lageröffnungen 32 fest. Die drei Bestandteile des Verbinders, nämlich Lagergehäuse 23, Stahlblechstreifen 24 und Exzenterbolzen 25, bilden eine zusammenhängende Baueinheit, ohne daß es zusätzlicher Befestigungsmittel bedarf. Die Exzenterscheibe 63 liegt dabei neben dem Stahlblechstreifen 24. Durch die Wirkung der Federzunge 53 wird die Exzenterscheibe 63 mit ihrer auch aus Fig. 10 ersichtlichen äußeren Stirnfläche 66 über den endseitigen Steuerabschnitt 61 des Stahlblechstreifens 24 gegen die Innenfläche der vorderen Seitenwand 26 im Lagergehäuse 23 angedrückt gehalten. Dadurch ragt der zur Betätigung des Exzenterbolzens 25 dienende Exzenterkopf 30 seitlich über die Begrenzungen des Lagergehäuses 23 hinaus.

Der aus nur drei Bestandteilen aufgebaute zusammenhängende Verbinder 20 kann als vorge-

fertige Baueinheit verkauft werden. Diese Baueinheit wird durch die an der Stirnfläche 13 befindliche Öffnung in den Hohlraum 12 der Profilstange 10 eingesteckt. Der aus dem Lagergehäuse herausragende Lagerkopf 30 des Exzenterbolzens 25 kann dabei, wie ein Druckknopf, im Sinne des aus Fig. 5 ersichtlichen Druckpfeils 67 eingedrückt werden. Dadurch verformt sich elastisch die Federzunge 53 und das Stirnende 34 des Lagerzapfens 33 und kann in den aus Fig. 3 ersichtlichen Leerraum 68 der Lageröffnung 32 hineingelangen. Bei diesem Eindrücken 67 gelangt der ganze Lagerkopf 30 unter die äußere Begrenzung des Lagergehäuses 23. Weil das Lagergehäuse dann keinen störend vorspringenden Lagerkopf 30 mehr aufweist, kann die ganze Baueinheit « Verbinder » in das Profil im Sinne des Bewegungspfeils 69 eingeschoben werden, bis es zu der bereits im Zusammenhang mit Fig. 2 erwähnten Anschlagwirkung zwischen der Profilstirnfläche 13 und den hinteren Absätzen 49 der beiden Kupplungsnasen 21 kommt. Dann befindet sich nämlich der Exzenterbolzen 25 in axialer Ausrichtung mit einer entsprechend dimensionierten Querbohrung 70 in der einen Seitenfläche der Profilstange 10. Der axiale Druck 67 auf den Lagerbolzen 25 läßt nach, so daß sein Lagerkopf 30 durch Entspannung der elastisch verformten Federzunge 53 wieder herausgedrückt wird und dadurch in die Querbohrung 70 hineingelangt. Dieser Endzustand ist in den Endlagen von Fig. 1 und 3 gezeigt. Durch den Eingriff des Lagerkopfes 30 in der Querbohrung 70 der Profilstange 10 ist der Verbinder 20 im Inneren der Profilstange 10 gesichert und kann nicht wieder von selbst herausfallen. Dies ist nur durch bewußte Druckausübung im Sinne des Pfeils 67 und gleichzeitiges Herausziehen des Verbinders 20 im Sinne des in Fig. 5 angedeuteten Bewegungspfeils 71 möglich. Damit hat die Federkraft der Federzunge 53 zugleich die Aufgabe, den Verbinder 20 in seiner Endlage in der Profilstange 10 zu sichern.

In Fig. 1 und 3 befindet sich der Kupplungshaken 22 in einer Freigabestellung, welche die Profilstange 10 kuppelfähig macht, um sie in eine ausgewählte Längsnut 14 einer Säule 11 einführen zu können. Hier befindet sich, wie am besten aus Fig. 3 hervorgeht, der Kupplungshaken 22 in Ausrichtung mit der Projektion der beiden Nasen 21, weshalb diese Kupplungsmittel 21, 22 nur eine Profilbreite 15 aufweisen, die derjenigen eines einzelnen Kupplungsmittels 21, 22 entspricht. Dementsprechend hat die Eingangsweite 16 der Längsnut 14 auch nur diese enge Ausbildung, um im Kupplungsfall die zueinander fluchtend liegenden Kupplungsmittel 21, 22 an der anderen Profilstange 10 in die ausgewählte Nut 14 einführen zu können. Im Einsteckzustand schlägt die Stirnfläche 13 der Profilstange 10 an die Außenfläche 17 der Nutwand an. Der Exzenterbolzen 25 befindet sich, wie in Fig. 1 aus einer Markierung 19 zu erkennen ist, in einer Drehposition, in der der exzentrische Teil seiner Exzenterscheibe 63 zur Kupplungsnase 22 hinweist, wie aus Fig. 3 hervorgeht. Die starren Kupplungsnasen 21 sorgen, daß die Profilstange 10 schon im Einsteckzustand eine ausgerichtete Position zur Profilsäule 11 einnimmt.

Um die Profilstange 10 in der ausgewählten Position an der Profilseite 11 zu fixieren, braucht der Exzenterbolzen 25 lediglich verdreht zu werden, wozu ein Werkzeug in seine profilierte Aufnahme 72 auf der Stirnfläche seines Lagerkopfes 30 eingeführt wird, welche in der Querbohrung 70 der Profilstange 10 sichtbar ist. Beim Drehen nimmt die Exzenterscheibe 63 die hintere Leiste 56 des Stahlblechstreifens 24 mit, bis schließlich die aus Fig. 2 und 4 ersichtliche Endlage erreicht ist, welche die gekuppelte Klemmstellung des Verbinders 20 zeigt. In dieser Klemmstellung hat sich der exzentrische Bereich des Exzenterbolzens 25, wie aus der Marke 19 zu erkennen ist, vor die endseitige Leiste 56 bewegt, während er vorher, in der Freigabestellung der Fig. 1, um 180° drehversetzt, an der lochseitigen Leiste 55 gemäß Fig. 3 lag. Wie aus dem Vergleich der Fig. 1 und 2 zu erkennen ist, hat sich in der Klemmstellung das vom Blechstreifen gebildete Halteglied 24 um eine Strecke 73 nach innen bewegt. Demgemäß ist auch der Kupplungshaken 22 einwärts geschoben. Weil aber an der Keilfläche 46 des Lagergehäuses 23 die erwähnte Gegenschräge 65 der Abkröpfung 52 dieses Halteglieds 24 unter dem Druck der Federzunge 53 anliegt, wird bei dieser Einwärtsverschiebung die Gegenschräge 65 an der Keilfläche 46 gleichzeitig seitlich verschoben, so daß der Kupplungshaken 22 die durch den Pfeil 74 in Fig. 4 angedeutete Schwenkbewegung ausführt. Dadurch kommt die Endkante 58 über den Nuteingang 16 hinweg vor die Nutinnenwand 18 und wird dort in der letzten Phase der Spannbewegung des Exzenters 63 fest angedrückt, wobei es wegen der geschweiften Ausbildung dieser Endkante 58 gemäß Fig. 7 zu einer Zwei-Punkt-Berührung kommt. In dieser Klemmstellung werden die starren Kupplungsnasen 21 an der der Haken-Endkante 58 gegenüberliegenden Laibungsseite 75 des Nuteingangs festgepreßt, wie aus Fig. 4 hervorgeht. Jetzt sind die beiden Profilstangen 10, 11 fest miteinander gekuppelt. Die starren Kupplungsnasen 21 lassen eine Torsionsbewegung der Profilstange 10 nicht zu.

In einer solchen Klemmstellung gemäß Fig. 2 und 4 läßt sich der Lagerkopf 30 nicht gegen die Federzunge 53 axial eindrücken, um die oben geschilderte Demontage des Verbinders 30 aus dem Inneren der Profilstange 10 einzuleiten. Damit ist zugleich sichergestellt, daß die gekuppelten Profilstangen 10, 11 nicht durch irrtümlichen Axialdruck auf den Lagerkopf 30 durch Ablösung des Verbinders 20 außer Eingriff kommen können. Wie am besten aus Fig. 8 zu erkennen ist, trägt die hintere Seitenwand 31 des Lagergehäuses 23 innenseitig Anschläge 76 durch angeformte Blöcke, die sich in der Klemmstellung unter das hintere Ende des Steuerabschnitts 61 am Halteglied 24 schieben. Das Halteglied ist dann blockiert und läßt sich nicht gegen die Kraft der Federzunge 53 axial nach innen drücken, wie aus Fig. 4 hervorgeht. Liegt dagegen die aus Fig. 3 und 5 ersichtliche Freigabestellung vor, so ist das Halteglied 24 soweit axial auswärts geschoben, daß sein hinteres Ende jenseits dieses Anschlags 76 zu liegen kommt und daher der Axialdruck 67 gemäß Fig. 5 ausführbar ist.

Der Exzenterbolzen 25 besteht aus einsatzgehärtetem Stahl. Beim Drehen des Exzenterbolzens 25 in seine Klemmstellung von Fig. 2 und 4 hat die im Zusammenhang mit Fig. 6 erläuterte Ausbiegung 60 die Möglichkeit, eine Längsfederung in das Halteglied 24 zu bringen ; beim Spannen des Exzenters kann diese Ausbiegung 60 sich strecken. Dadurch kann die Endkante 58 des Kupplungshakens 22 mit einer definierten Festhaltekraft an der Nutinnenwand 18 festgepreßt sein.

Um die beiden Profilstangen 10, 11 wieder voneinander zu lösen, braucht der Exzenterbolzen 25 nur in die Freigabestellung der Fig. 1 und 3 zurückgedreht zu werden. Dann drückt die Exzenterscheibe 63 gegen die vordere Leiste 55 und es kommt zu einem Auswärtsschub des Halteglieds 24 um die bereits erwähnte Strecke 73. Die Gegenschräge 65 gleitet dabei unter der Kraft der Federzunge 53 an der Keilfläche 46 abwärts und es kommt zu einem Rückschwenken des Kupplungshakens 22, entgegen dem Schwenkpfeil 74 von Fig. 4, wodurch der Kupplungshaken 22 wieder in Ausrichtung mit den beiden Kupplungsnasen 21 gelangt. Die Endkante 28 des Kupplungshakens 22 hat die Nutinnenwand 18 wieder freigegeben. Die Kupplungsmittel 21, 22 können aus der Längsnut 14 herausgezogen werden, wodurch die Profilstangen 10, 11 voneinander gelöst sind.

Es ist am 16.8.84 auf den Gegenstand des ursprünglichen Anspruches 5 eine Teilanmeldung 84 109 728.0 (Veröffentlichungsnr. 139954) eingereicht worden.

**Patentansprüche**

1. Gestell aus lösbar verbindbaren Profilstangen (10, 11), von denen wenigstens einige hinterschnittene Längsnuten (14) und andere einen Hohlraum (12) zur stirnseitigen Aufnahme eines Verbinders (20) aufweisen, der Verbinder (20) zweierlei aus dem Stirnende (13) der Profilstange (10) hervorragende und im Kupplungsfall in eine Längsnut (14) einsteckbare sowie dort festklemmbare Kupplungsmittel (21, 22) aufweist, nämlich einerseits ortsfeste Kupplungsnasen (21) an der Stirnseite (48) eines im Hohlraum (12) steckenden Lagergehäuses (23) und andererseits einen beweglichen Kupplungshaken (22) am herausragenden Ende eines im Lagergehäuse (23) längsverschieblichen Halteglieds (24), das Lagergehäuse (23) mit einer nach innen zu ansteigenden Keilfläche (46) und das Halteglied (24) mit einer daran anliegenden Gegenschräge (65) versehen ist, das Halteglied (24) mit einem quer zur Profilstange (10) verlaufenden Exzenterbolzen (25) versehen ist, der aus einem Lagerzapfen (33), einer Exzenterscheibe (63) sowie einem als Handhabe dienenden Drehkopf (30) besteht und axial federbelastet ist, der federbelastete Exzenterbolzen (25) seinen Drehkopf (30) aus dem Lagergehäuse (23) in eine Montagestellung herausgedrückt hält, wo der Drehkopf (30) nachgiebig in eine Querbohrung (70) der den Verbinder (20) aufnehmenden Profilstange (10) hineinragt und der Drehkopf (30) gegen die Federbelastung ins Lagergehäuse (23) in eine Demontagestellung eindrückbar ist, wo der Drehkopf (30) die Querbohrung (70) der Profilstange (10) freigibt, beim Drehen des Exzenterbolzens (25) die Exzenterscheibe (63) das Halteglied (24) zwischen einer längsgerichteten Ausschublage und einer Einschublage überführt und dabei durch Auflauf der Gegenschräge (65) auf die Keilfläche (46) den Kupplungshaken (22) quer zur Profilstange (10) bewegt, dadurch gekennzeichnet, daß das Halteglied (24) aus einem Stahlblechstreifen besteht und eine aus dem Stahlblechstreifen ausgeschnittene (59), abgebogene Federzunge (53) aufweist, welche mit ihrem freien Zungenende an einer Innenwand (43) des Lagergehäuses (23) abgestützt sowie längsverschieblich geführt ist, daß der Drehkopf (30) des Exzenterbolzens (25) in einem hinteren, als Montageöffnung dienenden Wandausschnitt (27) des Lagergehäuses (23) sitzt daß das innere Endstück (61) des quer zur Profilstange (10) federbelasteten Halteglieds (24) auf seiner der Federbelastung abgekehrten Flächenseite (62) einen Steuervorsprung (56) aufweist, der die Exzenterscheibe (63) randseitig hintergreift und dadurch den Drehkopf (30) im Wandausschnitt (27) des Lagergehäuses (23) festhält, und daß die Exzenterscheibe (63) mit ihrer inneren Stirnfläche (64) dieser Flächenseite (62) des Halteglieds (24) anliegt und durch die Federkraft des Halteglied-Endstücks (61) mit ihrer äußeren Stirnfläche (66) als Anschlag an der Innenseitenwand (26) des Lagergehäuses (23) sich abstützt.

2. Gestell nach Anspruch 1, dadurch gekennzeichnet, daß die Federzunge (53) im Mittelstück (57) des Halteglieds (24) zwischen dem vorderendigen Kupplungshaken (22) und dem federnden Endstück (61) angeordnet ist.

3. Gestell nach Anspruch 1 oder 2, dadurch gekennzeichnet, daß das Endstück (61) des Halteglieds (24) zum Durchstecken des Exzenterbolzens (25) ein in Richtung seiner Längsverschiebung (73) sich erstreckendes Langloch (54) besitzt und zusätzlich zum Steuervorsprung (56) auf der gleichen Flächenseite (62) einen weiteren Steuervorsprung (55) trägt, wobei die Steuervorsprünge (55, 56) beidseitig des Langlochs (54) angeordnet sind, die Exzenterscheibe (63) des Exzenterbolzens (25) zwischen sich fassen und von denen der eine (56) zum Einschub und der andere (55) zum Ausschub des Halteglieds (24) dient.

4. Gestell nach Anspruch 3, dadurch gekennzeichnet, daß die beiden Steuervorsprünge aus abgewinkelten Randteilen (55, 56) des Stahlblechstreifens (24) bestehen.

5. Gestell nach einem oder mehreren der Ansprüche 1 bis 4, dadurch gekennzeichnet, daß das Lagergehäuse (23) innen an seinen Seitenwänden (26, 31) in Richtung der Längsverschiebung (73) schräg verlaufende Montageflächen (42, 44) für das Halteglied (24) aufweist.

6. Gestell nach einem oder mehreren der Ansprüche 1 bis 5, dadurch gekennzeichnet, daß das Halteglied (24) in seinem Mittelstück (57) eine Z-förmige Ausbiegung (60) aufweist.

7. Gestell nach einem oder mehreren der Ansprüche 1 bis 6, dadurch gekennzeichnet, daß der Kupplungshaken (22) eine konkave Endkante (58) auweist, die eine Zwei-Punkt-Anlage an der vom Kupplungshaken (22) hintergriffenen Nutinnenwand (18) erzeugt.

8. Gestell nach einem oder mehreren der Ansprüche 1 bis 7, dadurch gekennzeichnet, daß das innere Stirnende (34) des Lagerzapfens (33) vom Exzenterbolzen (25) eine Nut (37) aufweist und das Lagergehäuse (23) zum Einführen des Exzenterbolzens (25) eine in die Nut (37) passende Leiste (35) trägt, deren Innenende (36) bei eingeführtem und verdrehtem Exzenterbolzen (25) zur Anlage des Lagerzapfens (25) dient.

**Claims**

1. A framework of releasably connectable profile bars (10, 11) of which at least some have undercut longitudinal slots (14), while others have a hollow space (12) for front face reception of a coupling member (20), the coupling member (20) has two different coupling means (21, 22) protruding from the face end (13) of the profile bar (10) and, when coupled, adapted to engage in a longitudinal slot (14) and clamped therein, namely on the one hand stationary coupling projections (21) on the front face end (48) of a bearing housing (23) fitted in the hollow space (12), and on the other hand a movable coupling hook (22) at the protruding end of a retaining element (24) movable longitudinally in the bearing housing (23), the bearing housing (23) is provided with an inwarly rising wedge surface (46) and the retaining element (24) with a matching inclined surface (65) resting thereon, the retaining element (24) is provided with an eccentric pin (25) extending transversely to the profile bar (10), which consists of a journal (33), an eccentric disk (63) as well as a control knob (30) serving as a handle, and which is spring-loaded axially, the spring-loaded eccentric pin (25) keeps its control knob (30) pressed out of the bearing housing (23) into an assembly position in which the control knob (30) resiliently projects into a crosshole (70) of the profile bar (10) accommodating the coupling member (20) and the control knob (30) can be pressed into the bearing housing (23) against the spring load into a disassembly position, in which the control knob (30) releases the crosshole (70) of the profile bar (10), the eccentric disk (63), upon rotation of the eccentric pin (25), moves the retaining element (24) between a longitudinally directed release position and a clamped position and thereby moves the coupling hook (22) transversely to the profile bar (10), when the matching inclined surface (65) passes up the wedge surface (46), characterized in that the retaining element (24) consists of a sheet metal strip and has a bent-away resilient tongue (53) cut out (59) from the sheet metal strip which has its free tongue end supported against an inner wall (43) of the bearing housing (23) and is guided for longitudinal movement, and that the control knob (30) of the eccentric pin (25) is located in a rear wall cutout (27) of the bearing housing (23), serving as assembly opening that the inner end section (61) of the retaining element (24) spring-loaded transversely to the profile bar (10) has a control projection (56) on its surface side (62) turned away from the spring load, which grips behind the eccentric disk (63) at the edge thereof, thereby retaining the control knob (30) in the wall cutout (27) of the bearing housing (23), and that the eccentric disk (63) with its inner surface (64) abuts this surface side (62) of the retaining element (24) and engages the inner sidewall (26) of the bearing housing (23) with its outer surface (66) as a stop by the spring force of the retaining element end section (61).

2. A framework as claimed in the claim 1, characterized in that the resilient tongue (53) is located in the center section (57) of the retaining element (24) between the front end coupling hook (22) and the resilient end section (61).

3. A framework as claimed in the claim 1 or 2, characterized in that the end section (61) of the retaining element (24) has an oblong hole (54) extending in the direction of its longitudinal movement for fitting of the eccentric pin (25) and in addition to the control projection (56) carries a further control projection (55) on the same surface side (62), the control projections (55, 56) being positioned on both sides of the oblong hole (54), gripping the eccentric disk (63) of the eccentric pin (25) between them, and of which the one (56) serves for clamping the retaining element (24) while the other (55) serves to release it.

4. A framework as claimed in the claim 3, characterized in that the two control projections consist of bent-off edge portions (55, 56) of the sheet metal strip (24).

5. A framework as claimed in any one or several of the claims 1 to 4, characterized in that the bearing housing (23) has assembly surfaces (42, 44) for the retaining element (24) on its inner side walls (26, 31) inclined in the direction of longitudinal movement (73).

6. A framework as claimed in any one or several of the claims 1 to 5, characterized in that the retaining element (24) has a Z-shaped bend (60) in its center section (57).

7. A framework as claimed in any one or several of the claims 1 to 6, characterized in that the coupling hook (22) has a concave end edge (58) providing a two-point engagement on the inner groove wall (18) behind which the coupling hook (22) grips.

8. A framework as claimed in any one or several of the claims 1 to 7, characterized in that the inner face end (34) of the bearing pin (33) of the eccentric pin (25) has a groove (37) and the bearing housing (23) carries a strip (35) fitting into the groove (37) for introduction of the eccentric pin (25), whose inner end (36) serves as abutment for the bearing pin (25), with the eccentric pin (25) introduced and rotated.

**Revendications**

1. Echafaudage formé de barres profilées pouvant être assemblées de manière amovible (10, 11), dont au moins certaines comportent des rainures longitudinales à parties rentrantes (14) et d'autres comportent une cavité (12) permettant de recevoir du côté frontal un connecteur (20), le connecteur (20) comporte des moyens d'accouplement (21, 22) de deux sortes, faisant saillie hors de l'extrémité frontale (13) de la barre profilée (10) et pouvant être emboîtés, en cas d'accouplement, dans une gorge longitudinale (14) et y être verrouillés, à savoir d'une part, des nez d'accouplement fixes à demeure (21) situés sur le côté frontal (48) d'un boîtier-palier (23) s'emboîtant dans la cavité (12) et, d'autre part, un crochet d'accouplement mobile (22) situé sur l'extrémité en saillie d'un organe de maintien (24) déplaçable longitudinalement dans le boîtier-palier (23), le boîtier-palier (23) est muni d'une surface en coin qui s'élève vers l'intérieur (46) et l'organe de maintien (24) est muni d'une contre-inclinaison s'y appuyant (65), l'organe de maintien (24) est muni d'un axe à excentrique (25) s'étendant transversalement à la barre profilée (10), cet axe étant constitué d'un tourillon (33), d'un disque excentrique (63), ainsi que d'une tête de rotation (30) servant de manœuvre, et étant chargé axialement par ressort, l'axe à excentrique chargé par ressort (25) maintient, dans une position de montage, sa tête de rotation (30) repoussée hors du boîtier-palier (23), la tête de rotation (30) pénétrant de manière élastique dans un perçage transversal (70) de la barre profilée (10) où est logé le connecteur (20), et la tête de rotation (30) peut, dans une position de démontage, être enfoncée dans le boîtier-palier (23), à l'encontre de la charge de ressort, la tête de rotation (30) libérant le perçage transversal (70) de la barre profilée (10), le disque excentrique (63) faisant passer, lors d'une rotation de l'axe à excentrique (25), l'organe de maintien (24) entre une position déployée orientée longitudinalement et une position rétractée, et déplaçant par suite le crochet d'accouplement (22) transversalement à la barre profilée (10), du fait de la montée de la contre-inclinaison (65) sur la surface en coin (46), caractérisé en ce que l'organe de maintien (24) est constitué d'une lame de tôle d'acier et comporte une languette élastique (53) découpée (59) à partir de la lame de tôle d'acier et repliée, cette languette étant appuyée, ainsi que guidée en déplacement longitudinal, par son extrémité libre sur une paroi interne (43) du boîtier-palier (23), en ce que la tête de rotation (30) de l'axe à excentrique (25) repose dans une découpe de paroi arrière (27) du boîtier-palier (23) servant d'ouverture de montage, en ce que la partie extrême intérieure (61) de l'organe de maintien (24) chargé par ressort transversalement à la barre profilée (10) comporte, sur sa face (62) opposée à la charge de ressort, une saillie de commande (56) qui s'accroche derrière le disque excentrique (63), sur son bord, et immobilise ainsi la tête de rotation (30) dans la découpe de paroi (27) du boîtier-palier (23), et en ce que le disque excentrique (63) s'applique, par sa face frontale intérieure (64), sur cette face (62) de l'organe de maintien (24) et s'appuie, par sa face frontale extérieure (66) servant de butée, sur la paroi latérale interne (26) du boîtier-palier (23), sous l'effet de la force élastique de la partie extrême (61) de l'organe de maintien.

2. Echafaudage selon la revendication 1, caractérisé en ce que la languette élastique (53) est disposée dans la partie médiane (57) de l'organe de maintien (24), entre le crochet d'accouplement (22) situé à l'extrémité antérieure et la partie extrême faisant ressort (61).

3. Echafaudage selon la revendication 1 ou 2, caractérisé en ce que la partie extrême (61) de l'organe de maintien (24) offre, pour le passage de l'axe à excentrique (25), un trou allongé (54) s'étendant suivant la direction de son déplacement longitudinal (73), et porte sur la même face (62), en plus de la saillie de commande (56), une autre saillie de commande (55), les saillies de commande (55, 56) étant disposées de part et d'autre du trou allongé (54) et prenant entre elles le disque excentrique (63) de l'axe à excentrique (25) et l'une d'elles (56) servant à la rétraction et l'autre (55) du déploiement de l'organe de maintien (24).

4. Echafaudage selon la revendication 3, caractérisé en ce que les deux saillies de commande sont constituées par des parties de bord (55, 56) coudées de la lame de tôle d'acier (24).

5. Echafaudage selon l'une ou plusieurs des revendications 1 à 4, caractérisé en ce que le boîtier-palier (23) comporte intérieurement, sur ses parois latérales (26, 31), des surfaces de montage (42, 44), pour l'organe de maintien (24), s'étendant de manière inclinée suivant la direction du déplacement longitudinal (73).

6. Echafaudage selon l'une ou plusieurs des revendications 1 à 5, caractérisé en ce que l'organe de maintien (24) comporte dans sa partie médiane (57) un pliage en forme de Z (60).

7. Echafaudage selon l'une ou plusieurs des revendications 1 à 6, caractérisé en ce que le crochet d'accouplement (22) comporte un bord extrême concave (58) qui fournit un appui à deux points sur la paroi interne de gorge (18) derrière laquelle vient en prise le crochet d'accouplement (22).

8. Echafaudage selon l'une ou plusieurs des revendications 1 à 7, caractérisé en ce que l'extrémité frontale intérieure (34) du tourillon (33) de l'axe à excentrique (25) comporte une rainure (37) et le boîtier-palier (23) porte, pour l'introduction de l'axe à excentrique (25), une nervure (35) s'adaptant dans la gorge (37) et dont l'extrémité interne (36) sert, lorsqu'on a introduit et fait tourner l'axe à excentrique (25), à l'appui du tourillon (25).

0 070 362

FIG.1

FIG.2

FIG.3

FIG.4

FIG.5

1

FIG.6

FIG.7

FIG.8

FIG.9

FIG.10

FIG.11

2